# EUROPÄISCHE PATENTSCHRIFT

(11) **EP 2 329 117 B1**
(45) Veröffentlichungstag und Bekanntmachung des Hinweises auf die Patenterteilung: **25.07.2012**
(21) Anmeldenummer: 09778546.3
(22) Anmeldetag: 16.09.2009
(51) Int. Cl.: F01N 3/025, F01N 3/035, F01N 3/20, F01N 3/26, F01M 13/00

(54) **ABGASNACHBEHANDLUNGSSYSTEM**
EXHAUST GAS AFTERTREATMENT SYSTEM
SYSTÈME DE POST-TRAITEMENT DES GAZ D'ÉCHAPPEMENT

(30) Priorität: 26.09.2008 DE 102008049153
(43) Veröffentlichungstag der Anmeldung: 08.06.2011
(73) Patentinhaber: DEUTZ Aktiengesellschaft, 51149 Köln (DE)
(72) Erfinder: BROLL, Peter, 51429 Bergisch-Gladbach (DE); SCHRAML, Stephan, 53639 Königswinter (DE); MIEBACH, Rolf, 50321 Brühl (DE)
(86) Internationale Anmeldenummer: PCT/EP2009/006685
(87) Internationale Veröffentlichungsnummer: WO 2010/034423

(56) Entgegenhaltungen:
- EP-A- 0 532 044
- DE-A1-102005 040 526
- KR-A- 20010 011 563
- US-A- 3 083 525
- US-A- 3 641 768

## Beschreibung

Die Erfindung betrifft ein Abgasnachbehandlungssystem für insbesondere eine selbstzündende Brennkraftmaschine mit einem in einem Gehäuse eingesetzten Katalysator und/oder Partikelfilter, dem/denen ein stromaufwärts in einer Abgasleitung angeordneter Brenner zugeordnet ist, dem Brennstoff und weiterhin über eine Brennluftleitung Brennluft zuführbar sind. Weiterhin betrifft die Erfindung ein Verfahren zum Betreiben eines derartigen Abgasnachbehandlungssystems.

Ein derartiges System ist aus der DE 44 43 133 A1 bekannt. Bei diesem Abgasnachbehandlungssystem eines ladedruckbetriebenen Verbrennungsmotors mit Partikelfilter und vorgeordnetem Brenner zur thermischen Regeneration des Partikelfilters wird der Brenner durch den Lader des Verbrennungsmotors mit Verbrennungsluft versorgt, welche für einen Regenerationsbetrieb des Partikelfilters benötigt wird. Dadurch kann ein Brennergebläse bekannter Bauart entfallen.

Ein etwas anderes System ist aus der DE 10 2005 040 526 A1 bekannt. Hier werden die Kurbelgehäuseentlüftungsgase gegebenenfalls unter Zuhilfenahme einer Pumpe und eines Behälters in die Abgasleitung stromabwärts hinter einem Partikelfilter eingeleitet werden. Ein Brenner für die Regeneration des Partikelfilters ist bei diesem System nicht vorgesehen.

Der Erfindung liegt die Aufgabe zugrunde, ein Abgasnachbehandlungssystem und ein Verfahren zum Betreiben eines derartigen Systems anzugeben, die hinsichtlich des Betriebs der Brennkraftmaschine verbessert sind.

Diese Aufgabe wird dadurch gelöst, dass die Brennluftleitung mit einer Kurbelgehäuseentlüftung der Brennkraftmaschine verschaltet ist bzw. bei dem erfindungsgemäßen Verfahren, dass die Brennluft das Kurbelgehäuseentlüftungsgas der Brennkraftmaschine ist. Dadurch wird eine sinnvolle Verwendung bzw. Entsorgung des Kurbelgehäuseentlüftungsgases erreicht. Bekannte Kurbelgehäuseentlüftungssysteme führen die Kurbelgehäusegase entweder dem Verbrennungssystem der Brennkraftmaschine zu oder leiten diese in das Abgassystem der Brennkraftmaschine ein. Bei dem ersten Verfahren wird die Verbrennung der Brennkraftmaschine negativ beeinflusst, während die Einleitung der Kurbelgehäuseentlüftungsgase in das Abgassystem Ablagerungen in einem nachgeschalteten Abgasturbolader verursacht, die für dessen zuverlässigen Betrieb nachteilig sind. Dadurch, dass das Kurbelgehäuseentlüftungsgas für den Brenner eines Abgasnachbehandlungssystems als Brennluft genutzt wird, werden alle zuvor beschriebenen Nachteile zumindest während des bestimmungsgemäßen Betriebs des Brenners vermieden. Vielmehr werden in dem Brenner eventuell in dem Kurbelgehäuseentlüftungsgas enthaltene Ölpartikel verbrannt und in dem nachgeschalteten Partikelfilter aus dem Abgasstrom als Asche ausgeschieden und aufgefangen. Da neben den (regenerierbaren) Partikeln in einem Partikelfilter grundsätzlich immer Asche, die beim Betrieb einer Brennkraftmaschine emittiert wird, aufgefangen wird und beispielsweise durch Auswaschen entfernt wird, wird hier keine Verschlechterung des Gesamtsystems bewirkt und auch kein zusätzlicher Arbeitsgang zur Reinigung des Partikelfilters erforderlich.

In Weiterbildung der Erfindung weist die Kurbelgehäuseentlüftung eine Kurbelgehäuseentlüftungsleitung auf, in die wiederum in weiterer Ausgestaltung eine Fördereinrichtung und eine Abscheideeinrichtung eingeschaltet sind. Grundsätzlich kann das Kurbelgehäuseentlüftungsgas direkt aus dem Kurbelgehäuse dem Brenner zugeführt werden. Bei der zuvor beschriebenen Ausgestaltung braucht aber ein beispielsweise bestehendes Kurbelgehäuseentlüftungssystem nur unwesentlich geändert zu werden, indem die Kurbelgehäuseentlüftungsleitung mit dem Brenner verschaltet wird.

In weiterer Ausgestaltung ist das Kurbelgehäuse und/oder die Kurbelgehäuseentlüftungsleitung mit einer Zusatzluftleitung verschaltet. Diese Ausgestaltung stellt sicher, dass für den Fall, dass mehr Brennluft benötigt wird als Kurbelgehäuseentlüftungsgas aus dem Kurbelgehäuse der Brennkraftmaschine austritt, ein Unterdruck in dem Kurbelgehäuse der Brennkraftmaschine vermieden wird und stattdessen Zusatzluft aus der Umgebung (Frischluft) der benötigten Menge von Brennluft zugemischt wird. Diese Zusatzluft wird vorteilhaft der gefilterten Ansaugluft vor einem (möglichen) Abgasturbolader entnommen.

Weitere vorteilhafte Ausgestaltungen der Erfindung sind der Zeichnungsbeschreibung zu entnehmen, in der in den Figuren dargestellte Ausführungsbeispiele der Erfindung näher beschrieben sind.

Es zeigen:
- Fig. 1: in schematischer Darstellung ein erstes Ausführungsbeispiel und
- Fig. 2: in schematischer Darstellung eine zweites Ausführungsbeispiel.

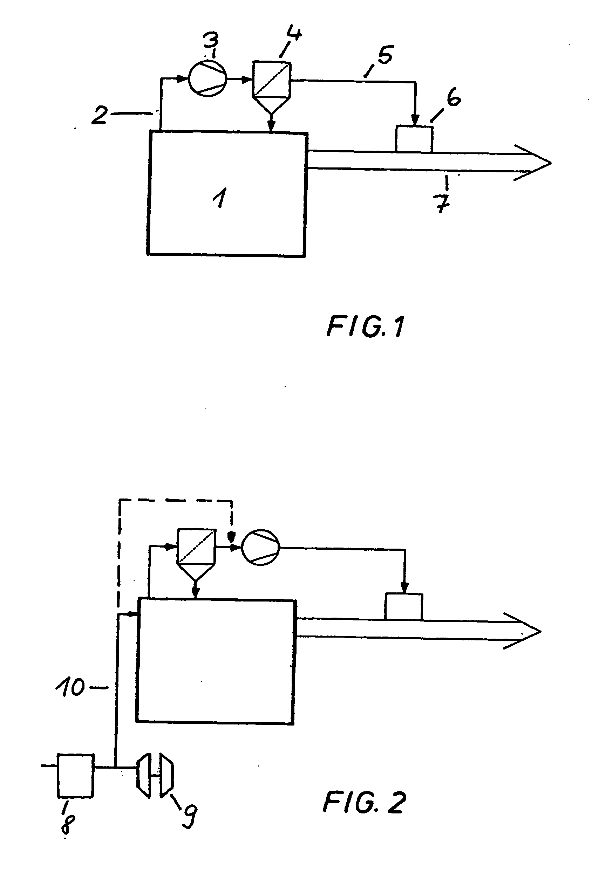

Fig. 1 zeigt in schematischer Darstellung eine Brennkraftmaschine 1, die insbesondere als selbstzündende Brennkraftmaschine ausgebildet ist. Die Brennkraftmaschine 1 weist in üblicher Bauart ein Kurbelgehäuse auf, in dem eine Kurbelwelle drehbar gelagert ist. An der Kurbelwelle sind Pleuel angelenkt, die in Zylindern bewegbare Kolben tragen. Die Kolben begrenzen zusammen mit den Zylindern und zugeordneten Zylinderköpfen Arbeitsräume, denen über Gaswechseleinrichtungen Verbrennungsluft zugeführt und Abgas abgezogen wird. Weiterhin wird in die Verbrennungsräume Kraftstoff beispielsweise über eine Common-Rail-Einspritzeinrichtung eingespritzt, der zusammen mit der Verbrennungsluft verbrennt und dabei die Kolben bewegt, die die Bewegung über die Pleuel auf die Kurbelwelle zu einer Drehbewegung derselben übertragen. Bei diesem Vorgang sammeln sich insbesondere von den Arbeitsräumen her durch zwischen den Kolben und den Zylindern durchtretende Gase in dem Kurbelgehäuse, die als Kurbelgehäuseentlüftungsgas abgeführt werden müssen. Dieses Kurbelgehäuseentlüftungsgas enthält unter anderem flüssiges und/oder gasförmiges Schmieröl der Brennkraftmaschine.

Das Kurbelgehäuseentlüftungsgas wird über eine Kurbelgehäuseentlüftungsleitung 2, die mit beispielsweise dem Kurbelgehäuse oder dem Zylinderkopf der Brennkraftmaschine 1 verbunden ist, abgeführt und einer Fördereinrichtung 3, die beispielsweise eine elektrisch oder mechanisch angetriebene Pumpe ist, und einem Abscheider 4, in dem dem Kurbelgehäuseentlüftungsgas Schmieröl entzogen wird, zugeführt. Das entzogene Schmieröl wird über eine Rückführleitung wieder der Brennkraftmaschine 1 zugeführt. Das dermaßen weitgehend schmierölbefreite Kurbelgehäuseentlüftungsgas wird über eine weiterführende Brennluftleitung 5 einem Brenner 6 als Brennluft zugeführt. Dem Brenner 6 wird weiterhin über eine nicht dargestellte Zuführeinrichtung Brennstoff zugeleitet und das so entstehende Gemisch wird verbrannt. Die bei der Verbrennung entstehenden heißen Brenngase werden zur bedarfsweisen oder kontinuierlichen Erwärmung des Abgases zur Einleitung chemischer Vorgänge in einem nachgeschalteten Katalysator und/oder Partikelfilter oder zum bedarfsweisen direkten Abbrennen von in einem nachgeschalteten Partikelfilter angesammelten Rußpartikeln benötigt beziehungsweise eingesetzt.

Das Ausführungsbeispiel gemäß Fig. 2 unterscheidet sich von dem von Fig. 1 dadurch, dass hier eine zusätzliche Luftzuführeinrichtung vorgesehen ist, über die dem Kurbelgehäuseentlüftungsgas von der Umgebung angesaugte Zusatzluft zugeführt wird. Diese Ausgestaltung stellt sicher, dass bei allen Betriebszuständen (hoher Bedarf an Brennluft und geringe Menge an zur Verfügung stehendem Kurbelgehäuseentlüftungsgas) kein (übermäßiger) Unterdruck in dem Kurbelgehäuse der Brennkraftmaschine auftritt. Diese Zusatzluft wird bevorzugt einem vorhandenen Ansaugsystem der Brennkraftmaschine entnommen. Das Ansaugsystem weist einen Luftfilter 8 auf, in dem aus der Umgebung angesaugte Luft gereinigt wird. Diese Luft wird einem Abgasturbolader 9 zugeführt, der in bekannter Weise mit der Abgasleitung und dem Verbrennungsgassystem der Brennkraftmaschine verschaltet ist.

Vor dem Abgasturbolader 9 wird über eine Zusatzluftleitung 10 gereinigte Luft entnommen und als Zusatzluft entweder zum Druckausgleich insbesondere in das Kurbelgehäuse der Brennkraftmaschine 1 oder in die Kurbelgehäuseentlüftungsleitung 2 hinter dem Abscheider 4 eingeführt. Wie in Fig. 2 dargestellt ist, können die Fördereinrichtung 3 und die Abscheideeinrichtung 4 auch in der hier dargestellten Anordnung verschaltet sein. In die Zusatzluftleitung kann weiterhin ein Rückschlagventil und/oder ein Mengenregelventil eingeschaltet sein.

### Bezugszeichen

- 1: Brennkraftmaschine
- 2: Kurbelgehäuseentlüftungsleitung
- 3: Fördereinrichtung
- 4: Abscheideeinrichtung
- 5: Brennluftleitung
- 6: Brenner
- 7: Abgasleitung
- 8: Luftfilter
- 9: Abgasturbolader
- 10: Zusatzluftleitung

## Patentansprüche

1. Abgasnachbehandlungssystem für insbesondere eine selbstzündende Brennkraftmaschine (1) mit einem in einem Gehäuse eingesetzten Katalysator und/oder Partikelfilter, dem/denen ein stromaufwärts in einer Abgasleitung angeordneter Brenner (6) zugeordnet ist, dem Brennstoff und weiterhin über eine Brennluftleitung Brennluft zuführbar sind,
**dadurch gekennzeichnet, dass** die Brennluftleitung (5) mit einer Kurbelgehäuseentlüftung der Brennkraftmaschine verschaltet ist.

2. Abgasnachbehandlungssystem nach Anspruch 1,
**dadurch gekennzeichnet, dass** die Kurbelgehäuseentlüftung eine Kurbelgehäuseentlüftungsleitung (2) aufweist.

3. Abgasnachbehandlungssystem nach Anspruch 2,
**dadurch gekennzeichnet, dass** in die Kurbelgehäuseentlüftungsleitung (2) eine Fördereinrichtung (3) eingeschaltet ist.

4. Abgasnachbehandlungssystem nach einem der Patentansprüche 2 oder 3,
**dadurch gekennzeichnet, dass** in die Kurbelgehäuseentlüftungsleitung (2) eine Abscheideeinrichtung (4) eingeschaltet ist.

5. Abgasnachbehandlungssystem nach einem der vorherigen Ansprüche,
**dadurch gekennzeichnet, dass** das Kurbelgehäuse und/oder die Kurbelgehäuseentlüftungsleitung (2) mit einer Zusatzluftleitung (10) verschaltet sind.

6. Verfahren zum Betreiben eines Abgasnachbehandlungssystems für insbesondere eine selbstzündende Brennkraftmaschine mit einem in einem Gehäuse eingesetzten Katalysator und/oder Partikelfilter, dem/denen ein stromaufwärts in einer Abgasleitung angeordneter Brenner zugeordnet ist, dem Brennstoff und weiterhin über eine Brennluftleitung Brennluft zuführbar sind,
**dadurch gekennzeichnet, dass** die Brennluft das Kurbelgehäuseentlüftungsgas der Brennkraftmaschine ist.

7. Verfahren nach Anspruch 6,
**dadurch gekennzeichnet, dass** das Kurbelgehäuseentlüftungsgas über eine Fördereinrichtung (3) und Abscheidevorrichtung (4) zugeführt wird.

8. Verfahren nach Anspruch 6 oder 7,
**dadurch gekennzeichnet, dass** dem Kurbelgehäuseentlüftungsgas Zusatzluft zugemischt wird.

## Claims

1. Exhaust-gas aftertreatment system for in particular an auto-ignition internal combustion engine (1), having a catalytic converter and/or particle filter inserted in a housing, said catalytic converter/particle filter being assigned a burner (6) arranged upstream in an exhaust line, to which burner can be supplied fuel and combustion air via a combustion air line,
**characterized in that** the combustion air line (5) is connected to a crankcase vent of the internal combustion engine.

2. Exhaust-gas aftertreatment system according to Claim 1,
**characterized in that** the crankcase vent has a crankcase vent line (2).

3. Exhaust-gas aftertreatment system according to Claim 2,
**characterized in that** a delivery unit (3) is connected into the crankcase vent line (2).

4. Exhaust-gas aftertreatment system according to either of Patent Claims 2 and 3,
**characterized in that** a separator device (4) is connected into the crankcase vent line (2).

5. Exhaust-gas aftertreatment system according to one of the preceding claims,
**characterized in that** the crankcase and/or the crankcase vent line (2) are/is connected to an auxiliary air line (10).

6. Method for operating an exhaust-gas aftertreatment system for in particular an auto-ignition internal combustion engine, having a catalytic converter and/or particle filter inserted in a housing, said catalytic converter/particle filter being assigned a burner arranged upstream in an exhaust line, to which burner can be supplied fuel and combustion air via a combustion air line,
**characterized in that** the combustion air is the crankcase vent gas of the internal combustion engine.

7. Method according to Claim 6,
**characterized in that** the crankcase vent gas is supplied via a delivery unit (3) and separator device (4) .

8. Method according to Claim 6 or 7,
**characterized in that** auxiliary air is admixed to the crankcase vent gas.

## Revendications

1. Système de post-traitement des gaz d'échappement destiné notamment à un moteur à combustion interne (1) à allumage automatique doté d'un catalyseur et/ou d'un filtre à particules insérés dans un carter, un brûleur (6) disposé vers l'amont dans une conduite de gaz d'échappement étant associé audit ou auxdits éléments, ledit brûleur pouvant être alimenté en combustible ainsi qu'en air inflammable par le biais d'une conduite d'air inflammable, **caractérisé en ce que** la conduite d'air inflammable (5) est connectée à une purge de carter de vilebrequin du moteur à combustion interne.

2. Système de post-traitement des gaz d'échappement selon la revendication 1, **caractérisé en ce que** la purge de carter de vilebrequin comporte une conduite de purge de carter de vilebrequin (2).

3. Système de post-traitement des gaz d'échappement selon la revendication 2, **caractérisé en ce qu'**un dispositif d'extraction (3) est raccordé dans la conduite de purge de carter de vilebrequin (2).

4. Système de post-traitement des gaz d'échappement selon l'une quelconque des revendications 2 ou 3, **caractérisé en ce qu'**un dispositif de séparation (4) est raccordé dans la conduite de purge de carter de vilebrequin (2).

5. Système de post-traitement des gaz d'échappement selon l'une quelconque des revendications précédentes, **caractérisé en ce que** le carter de vilebrequin et/ou la conduite de purge de carter de vilebrequin (2) sont connectés à une conduite d'air additionnel (10).

6. Procédé d'entraînement d'un système de post-traitement des gaz d'échappement destiné notamment à un moteur à combustion interne à allumage automatique équipé d'un catalyseur et/ou d'un filtre à particules insérés dans un carter, un brûleur disposé vers l'amont dans une conduite de gaz d'échappement étant associé audit ou auxdits éléments, un combustible ainsi que de l'air inflammable pouvant être amenés en outre par le biais d'une conduite d'air inflammable, **caractérisé en ce que** l'air inflammable est le gaz de purge de carter de vilebrequin du moteur à combustion interne.

7. Procédé selon la revendication 6, **caractérisé en ce que** le gaz de purge de carter de vilebrequin est transporté par le biais d'un dispositif d'extraction (3) et d'un dispositif de séparation (4).

8. Procédé selon la revendication 6 ou 7, **caractérisé en ce que** de l'air additionnel est mélangé au gaz de purge de carter de vilebrequin.
